# EUROPEAN PATENT SPECIFICATION

(11) **EP 2 425 633 B1**
(45) Date of publication and mention of the grant of the patent: **16.01.2013**
(21) Application number: 10720465.3
(22) Date of filing: 30.04.2010
(51) Int. Cl.: H04Q 11/00

(54) **USING A BIT MASK TO OBTAIN A UNIQUE IDENTIFIER**
VERWENDUNG EINER BITMASKE ZUM ERHALTEN EINER EINZIGARTIGEN KENNUNG
UTILISATION D'UN MASQUE BINAIRE POUR OBTENIR UN IDENTIFICATEUR UNIQUE

(30) Priority: 30.04.2009 US 433355
(43) Date of publication of application: 07.03.2012
(73) Proprietor: Telefonaktiebolaget L M Ericsson (publ), 164 83 Stockholm (SE)
(72) Inventor: JULIEN, Martin, Laval, Québec H7P 5H1 (CA); GORDON, David, Montreal, Québec H4L 5P4 (CA); BELIVEAU, Ludovic, Montreal, Québec H2M 2S3 (CA); BRUNNER, Robert, Montreal, Québec H3N 2C1 (CA)
(74) Representative: HOFFMANN EITLE
(86) International application number: PCT/IB2010/051913
(87) International publication number: WO 2010/125546

(56) References cited:
- US-A1- 2006 277 309
- US-A1- 2008 292 313

## Description

### Technical Field

The present invention relates to identifier assignment and, more particularly, to unique identifier assignment in a passive optical network.

### Background

The International Telecommunications Union (ITU) has standards for point to multi point (p2mp) relating to the use of optical access networking, e.g., ITU-T G.984. Networks of particular interest for this specification are passive optical networks (PONs). Three types of PONs are, e.g., Ethernet PONs (EPONs), broadband PONs (BPONs) and gigabit capable PONs (GPONs), characteristics of which are displayed below for comparison in Table 1.
Table 1 - Major PON Technologies and Properties
[Table 1]

**[Table ]**

| Characteristics | EPON | BPON | GPON |
|---|---|---|---|
| Standard | IEEE 802.3ah | ITU-T G.983 | ITU-T G.984 |
| Protocol | Ethernet | ATM | Ethernet |
| Rates (Mbps) | 1244 up / 1244 down | 622/1244 down 155/622 up | 1244/2488 down 155 to 2488 up |
| Span (Km) | 10 | 20 | 20 |
| Number of Splits | 16 | 32 | 64 |

PON efficiency can be affected by numerous things, for example, transmit power, distance, traffic volume, quality of equipment, quiet windows, etc. While there is often a tradeoff between cost and efficiency, efficiency improvements can reduce the overall cost of a system, particularly when considered over time. Another factor that can affect PON efficiency is the number of optical network units (ONUs) supported by each optical line termination (OLT) in the PON. The more ONUs per OLT in a PON, the more splitting of the optical signal (which increases the link budget) and the more control signaling that is typically required, which leads to more inefficiencies in the desired data transfers. As this technology matures, PONs could scale from 32 ONUs per OLT to possibly, 64, 128 or more per OLT, particularly if these ONUs are located relatively close to their OLT e.g., within 20 kilometers. As such, decreasing the likelihood of inefficiencies in PONs is addressed by the present invention. Similar kinds of inefficiencies present in many other contexts are likely addressed by the present invention.

For example, US 2008/0292313 A1 discloses the ranging of a device in a point-to-multipoint network. Specifically, the respective teaching considers a device identifier which is associated with a device, this device identifier and a so-called unique identifier also associated with the device are transmitted over a point-to-multipoint network to a central unit for ranging a device in the network. However, the respective teaching does not consider any bit mask value for producing a plurality of unique identifiers from data values.

Further, US 2006/0277309 A1 discloses discovering so called Antenna Line Devices. The respective teaching considers a so-called divide-and-conquer approach for identifying devices on the network in a short period of time.

### Summary

The mentioned problems are solved by the subject-matter of the independent claim. Further preferred embodiments are defined in the dependent claims.

In a first aspect, the present invention relates to a method for assigning unique identifiers to a plurality of nodes comprising the steps of maintaining a plurality of data values in a memory, each being associated to one of the nodes, obtaining a bit mask value that, when applied to the plurality of data values, produces a plurality of unique identifiers and sending the bit mask value to the nodes in order to assign a unique identifier to ach of the nodes.

The step of maintaining the plurality of data values may optionally be performed by storing each of the plurality of data values in the memory of an Optical Line Terminal (OLT). Each of the plurality of nodes can be Optical Network Units (ONUs) and each of the data values correspond to a serial number of its related ONU. Prior to the step of maintaining the plurality of data values in the OLT, the method may comprise a step of obtaining the serial numbers from the plurality of ONUs from a discovery procedure. The bit mask value may be stores in memory.

Obtaining the bit mask value may optionally be performed by iteratively computing a preliminary bit mask value and applying the preliminary bit mask value to the plurality of data values until the plurality of unique identifiers is obtained in which case the preliminary bit mask value provides the bit mask value. Alternatively, the step of obtaining the bit mask value can be performed by reading an appropriate value from the memory. Sending the bit mask value may be performed, for instance, by sending a broadcast or multicast message to the plurality of nodes.

Following the step of obtaining the bit mask value, the method may optionally comprise determining the plurality of unique identifiers for each of the nodes and storing the plurality of unique identifiers in the memory. Subsequently, traffic may be received from one of the plurality of nodes containing the unique identifier of the one node, wherein the unique identifier of the one node has been obtained therein using the bit mask value. Likewise, the unique identifiers may subsequently be used to send a unicast message to any one of the plurality nodes.

A second aspect of the present invention is directed to a method for obtaining a unique identifier for a node comprising the steps of maintaining a data value in the node, obtaining a bit mask value in the node, applying the bit mask value to the data value thereby obtaining a unique identifier for the node and storing the unique identifier in a memory.

The method may subsequently comprise steps of receiving traffic and discarding the traffic if it is not broadcast and if it does not contain the unique identifier. Likewise, the method may further comprise a step of subsequently using the unique identifier upon sending traffic.

A third aspect of the present invention is directed to a communications node comprising a secondary storage, a memory and a processor. The secondary storage is capable of maintaining at least one data value, one unique identifier associated with each of the at least one data value and a bit mask value. The memory is for storing program instructions associated with the generation of the unique identifier and the processor is for executing the program instructions causing the bit mask value to be applied to the data value thereby obtaining the associated unique identifier.

### Brief Description of the Drawings

A more complete understanding of the present invention may be had by reference to the following Detailed Description when taken in conjunction with the accompanying drawings wherein:

Figure 1 illustrates an exemplary Gigabit-capable PON (GPON) in accordance with the teachings of the present invention;

Figure 2 depicts Optical Network Units (ONUs) using a time division multiple access (TDMA) scheme in accordance with the teachings of the present invention;

Figure 3 shows a high level flowchart of steps performed during the setup of an ONU in a PON in accordance with the teachings of the present invention;

Figure 4 is an exemplary signal diagram and flow chart of a system for enhancing ONU-ID assignment in accordance with the teachings of the invention;

Figures 5A and 5B together referred to as Figure 5 are exemplary flow charts performed in a node in accordance with the teachings of the present invention; and

Figure 6 shows a communications node in accordance with the teachings of the present invention.

### Detailed Description

The following detailed description of the exemplary embodiments refers to the accompanying drawings. The same reference numbers in different drawings identify the same or similar elements. Also, the following detailed description does not limit the invention. Instead, the scope of the invention is defined by the appended claims.

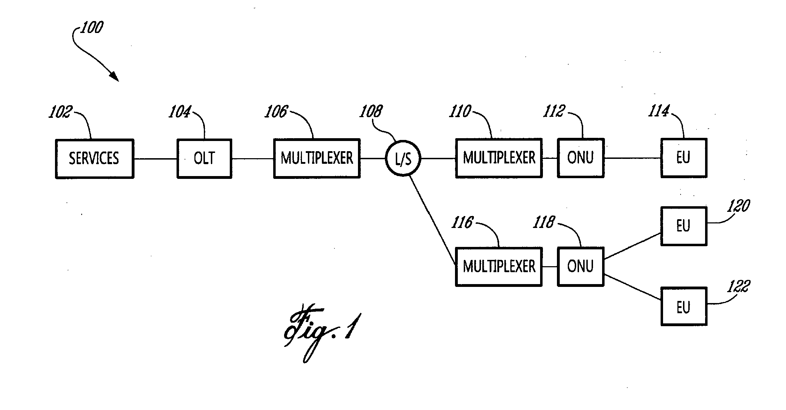

According to exemplary embodiments it is desirable to provide mechanisms and methods that allow for improving the efficiency of a passive optical network (PON). In order to provide some context for this discussion, an exemplary Gigabit-capable PON (GPON) is shown in Figure 1. While a GPON is used as the basis of discussion herein, other types of PONs, e.g., Ethernet PONs (EPONs) and broadband PONs (BPONs), could benefit from the exemplary embodiments described below with minor variations as would be understood by one skilled in the art.

According to exemplary embodiments, GPON 100 in Figure 1 shows elements of an optical distribution network (ODN) that interact with various endpoints of an optical network unit (ONU). As shown in Figure 1, one or more service providers or types 102 can be in communication with an optical line termination (OLT) 104, which is typically located in a central office (CO) (not shown). The OLT 104 provides the network side interface and is typically in communication with at least one ONU 112, 118 (or an optical network termination (ONT) which performs similar functions as an ONU). These service providers 102 can provide a variety of services such as video-on-demand or high definition television (HDTV), Voice over IP (VoIP) and high speed internet access (HSIA). The OLT 104 transmits information to multiplexer 106 which multiplexes the data and transmits the data optically to a passive combiner/splitter 108. The passive combiner/splitter 108 then splits the signal and transmits it to the upstream multiplexers 110 and 116. The multiplexers 110 and 116 demultiplex the signal and forward it on to their respective ONUs 112 and 118. These multiplexers (108, 110 and 116) are typically integrated into both the OLT and the ONUs and are used for placing and extracting the upstream and downstream wavelengths depending upon their locations in the optical network. These ONUs 112 and 118 then forward the information onto their respective end users (EU) 114, 120 and 122, e.g., devices such as a computer, a television, etc.

It will be understood by those skilled in the art that this purely illustrative GPON 100 can be implemented in various ways, e.g., with modifications where different functions are combined or performed in a different manner. For example the multiplexers (108, 110 and 116) typically are duplexers, but if an additional signal is being transmitted, e.g., a cable-television signal in a GPON 100, they can act as triplexers. Additionally in the upstream direction, the optical signal would typically have a different wavelength from the downstream signal and use the same multiplexers 106, 110 and 116, which have bidirectional capabilities.

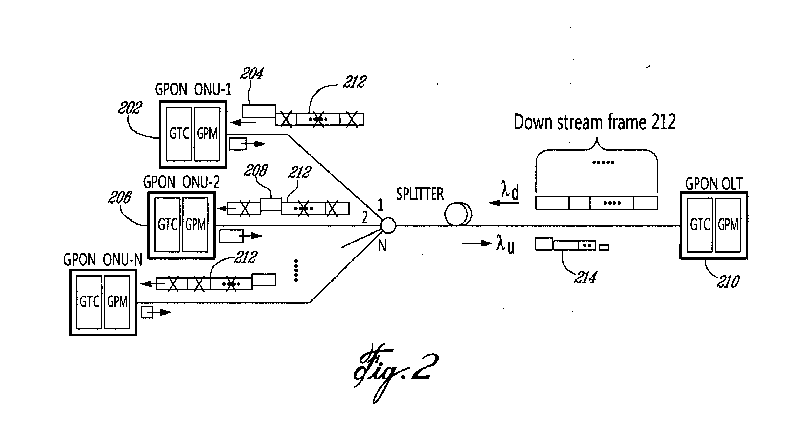

Figure 2 shows exemplary Optical Network Units (ONUs) using a time division multiple access (TDMA). In the upstream direction, a TDMA scheme (e.g., as shown in Figure 2) is used in a PON where ONUs 202 and 206 are allowed to transmit data in granted time-slots on their optical wavelength(s). This means that ONUs 202, 206 transmit in a burst mode at their allotted time slots, as compared to a 125 µs long frame 212 in the downstream direction from the OLT 210. Since the ONUs 202, 206 are located at different distances from the OLT 210, the ONUs 202, 206 are informed by the OLT 210 when, and with what power, to transmit their respective bursts so that the ONUs signals are arriving in an aligned time structure at the OLT 210. For example, the OLT 210 transmits a 125 µs long frame 212 which is composed of a GTC header and a GTC payload. The GTC Payload typically contains a sequence of GEM Headers and GEM Payloads, with the GEM Header containing information identifying the destination ONU, e.g., the ONU-ID, and the GEM Payload containing the desired data. While it is shown in Figure 2 that each ONU 202, 206 is receiving a single GEM Header/Payload segment within the frame 212 in sequential order, it is possible for an ONU 202, 206 to receive multiple GEM header/Payload segments within a single downstream frame 212 in whatever order the OLT 210 decides to use since each ONU can filter the downstream data based, e.g., on its assigned ONU-ID. Based on the received data the ONUs know their transmission time slot which results in an upstream message 214 where the different ONU outputs are in a time sequential order. Each of the ONUs 202, 206 and the OLT 210 may include various protocol stack processing entities including, for example, a GPON transmission convergence (GTC) processing entity and a GPON physical medium (GPM) processing entity. More information regarding GTC and GPM can be found in ITU-T G.984.3.

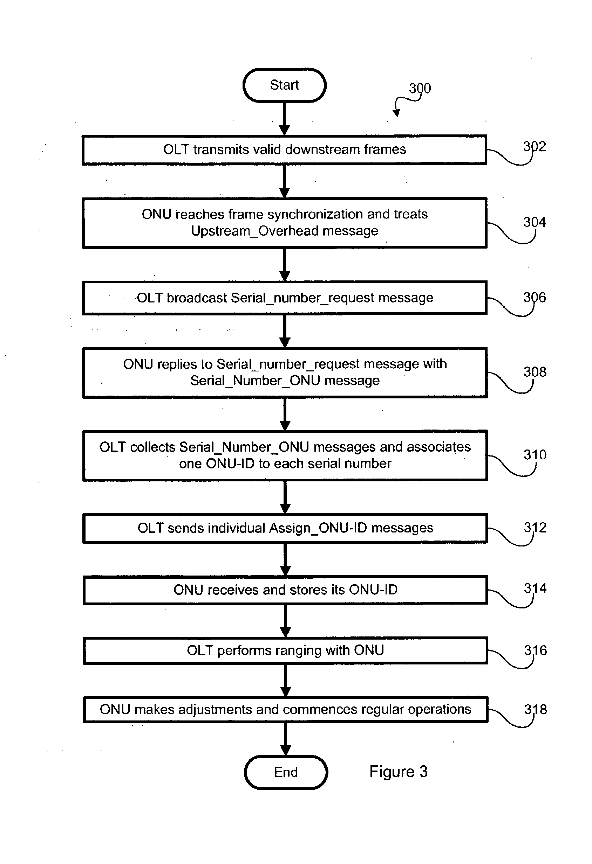

Based upon the exemplary PON described above, a general description of the activation phase between an ONU 202, 206 and the OLT 210 which supports exemplary embodiments will now be described with respect to Figure 3, which is a high level flowchart which shows steps performed during the setup of an ONU 202 in a PON.

It is assumed that the OLT 210 is not aware of all the Serial Numbers of ONUs on the PON (Discovered SN Method). During the first state (O1), the OLT 210 is transmitting valid downstream frames (step 302), and the ONU 202 attempts to attain frame synchronization. Once the ONU 202 is satisfied that it reached frame synchronization, it transits to the second state (02).

After transmitting at least two valid downstream frames, the OLT 210 transmits an Upstream_Overhead message 3 times. Upon receiving at least one of the messages, the ONU 202 treats the Upstream_Overhead message by storing the received values and constructing the preamble and delimiter using the values received (step 304). The ONU 202 then transitions to a third state (03).

The purpose of the third state is to assign unique ONU-ID to each ONU. In order to achieve this, there are four messages that flow between the OLT 210 and ONU 202: Extended_Burst_Length message (optional, at the discretion of the OLT 210), Serial_Number_Request message, Serial_Number_ONU message and Assign_ONU-ID Message. If used at all, the OLT 210 transmits the Extended_Burst_Length message 3 times. If the ONU 202 supports this mode of operation, upon receiving at least one of the messages, it stores the values received and constructs a new preamble. Otherwise, these messages are ignored (not shown).

The Serial_Number_Request message (or SN_request message) is broadcast by the OLT 202 (step 306). The Serial_Number_Request message further instructs the receiving ONUs of the duration of a quiet window to follow the Serial_Number_Request message. The quiet window is allowing the ONUs to respond to the Serial_Number_Request message, as will be shown later. The quiet window characteristics are determined in order to reduce the likelihood of transmission collision in the upstream. The quiet window should take into account the following parameters: ONUs minimum and maximum distances, 48µs random delay, 2µs caused by ±1µs variation in ONU response time, margin for ONUs which transmit ONU Additional Data (up to 120 bytes) and margin for next transmission (up to 131 bytes).

The ONU 202 responds to the Serial_Number_Request message by sending an Serial_Number_ONU message (step 308) after waiting a random delay (e.g., of 0-48µs, i.e., during the quiet window). If the ONU 202 supports Extended Burst Length, and the Extended_Burst_Length message was received, the ONU 202 should reflect it in this transmission. The ONU 202 may transmit ONU Additional Data of up to 120 bytes following this transmission.

The OLT 210 waits for transmissions following the Serial_Number_Request message and collects incoming Senal_Number_ONU messages. Thereafter, the OLT 210 associates available ONU-ID values with the received serial numbers (step 310). The OLT 210 then assigns each ONU-ID to each individual ONU 202 using an Assign_ONU-ID message addressed to each individual ONU 202 (step 312). The OLT 210 transmits the Assign_ONU-ID messages 3 times. Upon receiving at least one of the messages, the ONU 202 stores the ONU-ID and transitions to a fourth state (04) (step 314). Ranging is performed in the fourth state by the OLT 210 and the ONU 202 (step 316). The ONU 202 then makes adjustments as instructed (and/or needed) and commences regular operations (step 318).

As described above, ONUs 202, 206 can be discovered by the OLT 210. This can occur via an auto discovery process, e.g., when the PON is first turned on, through preconfigured ONUs informing the OLT 210 of their presence when they are added to the network, or some combination of the two. Auto discovery can be turned off after an OLT 210 initially discovers all ONUs in the PON at startup. Additionally, according to exemplary embodiments, the auto discovery feature of the OLT 210 can be turned back on either manually, or at pre-set times for pre-set durations as desired. This would enable the PON to have new ONUs added, which will then be discovered and activated during a future auto discovery window, as well as discovering ONUs which have dropped from the PON as needed, e.g., due to scheduled updates, desired reconfigurations of the PON, failure and the like. Other triggers in addition to or as an alternative to a pre-set time for turning the auto-discovery feature on could be used for triggering the discovery process by OLT 210.

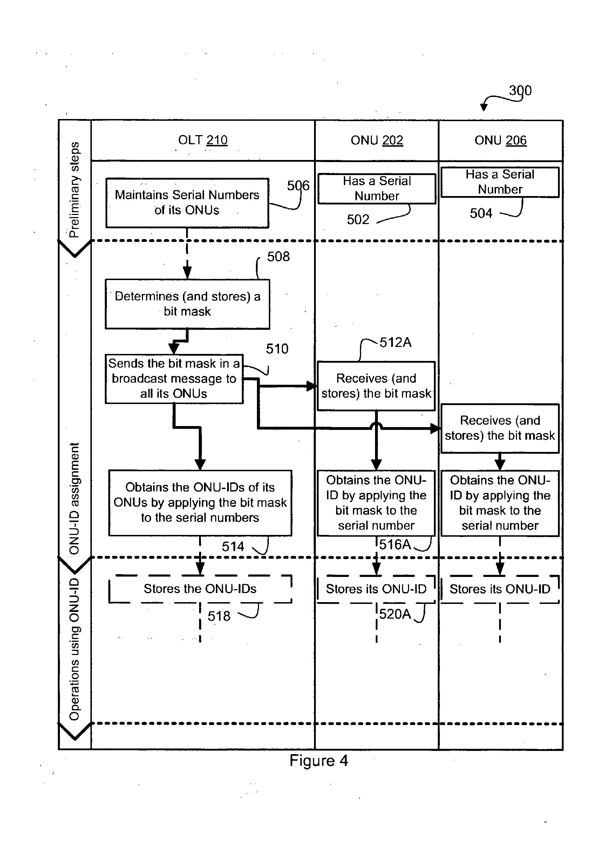

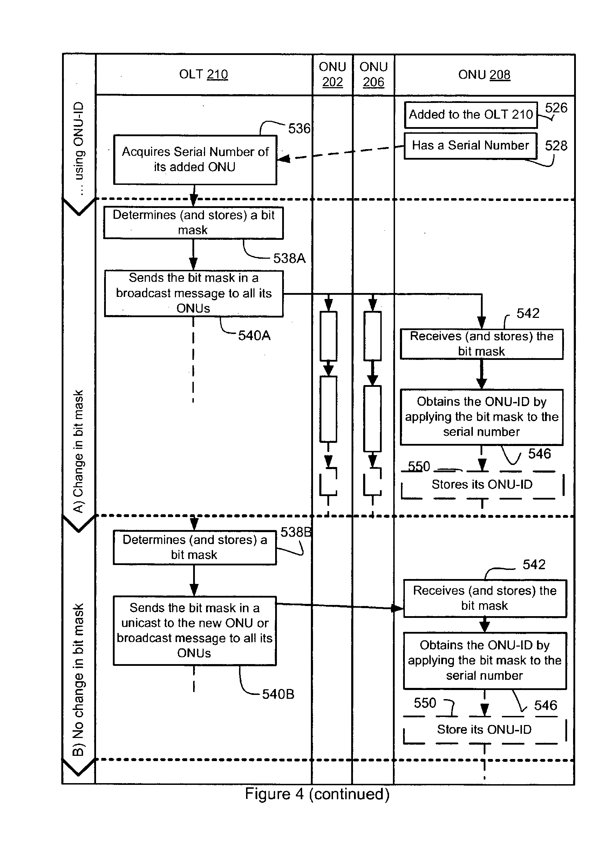

As can be appreciated from the preceding example, during a typical setup process, an OLT 210 transmits a specific Assign_ONU-ID message to every ONU 202, 206. Furthermore, given the shared nature of a PON, various delays are likely incurred to avoid collision. The overall delay in assigning ONU-IDs to each ONU therefore increases with the number of ONUs 202, 206 managed by the OLT 210. A general objective of the present invention is to enable determination of identifiers unique into a given realm by relying on existing distinguishable data. Subsequent assignment of the unique identifiers can thereafter be made without relying only on individual assignment messages by targeting more than one node at once. For instance, in the context of a PON, an OLT could define a realm for the purpose of the present example. Each ONU has a serial number. As long as more than two of the serial numbers of the ONUs in the OLT realm are distinct (that is, distinguishable data), it is possible to obtain a unique identifier from the corresponding the serial numbers. For example, it is possible to determine a bit mask that, when applied to such serial numbers of ONUs under the OLT, produces unique values. Exemplary ONU-ID assignment will now be described with respect to Figure 4.

Figure 4 shows an exemplary signal diagram and flow chart of a system for enhancing ONU-ID assignment in accordance with the teachings of the invention. The OLT 210, the ONUs 202 and 206 are shown on Figure 4. The OLT 210 is likely to control more than two ONUs. The number ONUs likely to be controlled is not limited by the present invention. As a preliminary condition, the ONU 202 and the ONU 206 each have a serial number (502 and 504). The ONUs 202 and 206 are in communication with the OLT 210. In that context, the serial number of the ONU 202 and the serial number of the ONU 206 need to be distinct under the OLT 210. If more ONUs would be present, all serial numbers of ONUs under the OLT 210 would also have to be distinct (or unique) thereunder. The serial number of an ONU is likely to be a fixed value entered upon confirmation of the ONU. Yet, the serial number could be generated by the OLT 210 or the ONU itself as long as the condition of uniqueness under the OLT 210 is met. In any case, the OLT 210 has to acquire serial number of each ONU with which it communicates. The acquisition of serial numbers may be done dynamically (e.g., an in the example shown in Figure 3) or may be statically entered upon configuration of the OLT 210. The OLT 210 thereafter maintains a record of some sort for each serial number (506). Such record for each serial number can be stored in a memory of the OLT 210 (Random Access Memory (RAM) of various types, flash memory, Hard Disk Drive (HDD) of various kinds, clustered storage means or database of various kinds that hide the actual storing details, etc.). Storing, in the context of the present invention, refers to keeping information in persistent or volatile memory e.g., as needed for conducting the invention, for future reference or statistical purpose.

Thereafter, the OLT 210 determines a Serial_Number bit mask 508 that, when applied to all the serial numbers of the ONUs under the OLT 210, produces unique values. Two examples of bit masks in view of exemplary serial number values are shown below in Table 2.
Table 2: Examples of bit masks in view of exemplary serial numbers expressed in bits (binary).
[Table 2]

**[Table ]**

| | Example 1 | Example 2 |
|---|---|---|
| Serial # 1 | 01010101 | 0101010101010101 |
| Serial # 2 | 11010101 | 0101010101110101 |
| Bit Mask | 11111111 | 0000000001111111 |
| Unique values | 01010101 and | 1010101 and |
| | • | • |
| | 11010101 | 1110101 |

The Serial_Number bit mask can be determined and expressed in many different manners. Table 2 shows a bit-wise bit mask while an hexadecimal bit mask is shown in Table 3 below. Table 3 shows that the Serial_number bit mask does not need to contain only successive '1' values. Table 4, further below, shows serial numbers expressed using ASCII characters, each using 1 byte with a Serial_Number bit mask expressed in hexadecimal (two symbols per byte). Table 4 further shows that the Serial_Number bit mask does not need to be optimal, as long as unique values are obtained upon its application on relevant serial numbers. Table 5 shows examples of bit masks in view of exemplary serial numbers expressed in ASCII characters each using 1 byte with a Serial_Number bit mask expressed in hexadecimal (two symbols per byte). In Table 5, the unique values are expressed in a contracted format (e.g., over a fixed length shorter than the length of the serial numbers). Table 5 further shows that data not useful in determining the unique values (e.g., because it is common to all values) could be removed. This is especially useful if the unique values have to fit over a fixed length shorter than the serial numbers.
Table 3: Examples of bit masks in view of exemplary serial numbers expressed in hexadecimal.
[Table 3]

**[Table ]**

| | Example 3 | Example 4 |
|---|---|---|
| Serial # 1 | 4122DDDA | E1F1F1C11121314 |
| Serial # 2 | 11FF777A | E1F1F1C12131415 |
| Bit Mask | F00000FF | 000000000000000F |
| Unique values | 400000DA and | 4 and |
| | • | • |
| | 1000007A | 5 |

Table 4: Examples of bit masks in view of exemplary serial numbers expressed in ASCII characters (hexadecimal bit mask).
[Table 4]

**[Table ]**

| | Example 5 | Example 6 |
|---|---|---|
| Serial # 1 | ERIC 1234 | ERIC 1234 |
| Serial # 2 | ERIC2244 | ERIC2244 |
| Bit Mask | 000000000000FFFF | 00000000FFFFFFFF |
| Unique values | 3 4 and | 1 2 3 4 and |
| | • | • |
| | 44 | 2244 |

Table 5: Examples of bit masks in view of exemplary serial numbers expressed in ASCII characters (hexadecimal bit mask) with unique value expressed in a contracted format.
[Table 5]

**[Table ]**

| | Example 5 | Example 6 |
|---|---|---|
| Serial # 1 | ERIC1234 | ERIC1234 |
| Serial # 2 | MARC1234 | MARC1234 |
| Bit Mask | FFFF00000000FFFF | FFFFFFFFFFFFFFFF |
| Unique values | E R 3 4 and | E R 3 4 and |
| | • | • |
| | MA34 | MA34 |

The Serial_Number bit mask determination (508) can take the form of a simple reading from a memory of a bit mask value previously entered (e.g., during configuration of the OLT 210 or a previous computation). This option is of particular interest when serial numbers of ONUs are provided in a standard and known manner. Alternatively, the determination can be made by iteratively computing a bit mask value and successively applying such bit mask value on serial numbers until only unique values are obtained. The granularity of the serial numbers can be taken in consideration during such computation (e.g., ASCII or hexadecimal serial numbers with hexadecimal bit mask or binary serial numbers and bit mask, etc.).

Following its determination in step 508, the Serial_Number bit mask is ready to be sent by the OLT 210 to the ONUs 202 and 206 (510) using a single message (or using a number of messages that is smaller than the number of destinations that should receive it). In the context of PONs, the Serial_Number bit mask is likely to be sent using a broadcast message. Other technologies could use multicast message(s). Therefore, the individual and specific Assign_ONU-ID messages can be replaced by the Serial_Number bit mask message(s) 510.

After step 508, the OLT 210 is ready to obtain one ONU-ID for each of its ONUs 202 and 206 (514) by applying the Serial_Number bit mask to each serial number. The obtainment of ONU-IDs may already be completed in the computation related to the step 508, in which case in it might not be repeated. Once obtained, the ONU-IDs can be stored conventionally (518) thereby allowing normal use thereof by the OLT 210. Alternatively, only the Serial_Number bit mask could be stored and used to obtain the necessary ONU-ID(s) based on the relevant serial number(s). While this option appears to have more drawbacks than advantages for the PON technologies, there might be some PON examples or other technologies where the approach is sensible. It shall be noted that, if ONU-IDs are stored, storing the Serial_Number bit mask itself may not be necessary.

On the ONU side, the ONU 202 will be taken as a reference, bearing in mind that the same steps occur in all receiving ONUs. The Serial_Number bit mask is received (512A) and stored, at least temporarily, in the ONU 202. Thereafter, the Serial_Number bit mask is applied to the serial number of the ONU 202 (516A) to obtain the ONU-ID of the ONU 202. Once obtained, the ONU-ID of the ONU 202 can be stored conventionally (520A) thereby allowing normal use thereof by the ONU 202. It could alternatively be generated each time it is needed using the Serial_Number bit mask. Just as in the case of the OLT 210, the Serial_Number bit mask may be stored or not, depending on the configuration choices.

The OLT 210 and the ONUs 202, 206 then proceed with normal operations, making use of the ONU-ID as needed during the course of normal operations. Figure 4 then continues with the addition (526) of an ONU 208 to the OLT 210. Just as the ONUs 202 and 206, the ONU 208 has to have serial number (528) that is distinct from other serial numbers already present under the OLT 210. In Figure 4, the OLT 210 is shown acquiring the serial number of the ONU 208 (536). If the format of the serial numbers under the OLT 210 is already determined (e.g., the OLT 210 knows what portion of the serial number is distinctive), the step 536 of acquiring the serial number may be unnecessary.

In view of the addition of the ONU 208, the OLT 210 nevertheless has to take action to enable assignment of an ONU-ID to the ONU 208. In practice, for efficiency purposes, the OLT 210 likely applies the Serial_Number bit mask previously used to obtained the ONU-IDs for the ONUs 202 and 206 (i.e., existing Serial_Number bit mask) to the ONU's 208 serial number. If the result is unique compared to the ONU-IDs currently in service, then the existing Serial_Number bit mask can be used as is. Otherwise, an ONU-ID needs to be generated without reference to the existing Serial_Number bit mask (e.g., a new Serial_Number bit mask has to be determined, an ONU-ID has to be generated separately, etc.). Figure 4 shows some examples of options in treating the addition of the ONU 208: A) there is a change in the Serial_Number bit mask and B) there is no change in the Serial_Number bit mask. A third option C) (not shown) is that no new Serial_Number bit mask can be determined in view of the existing Serial_Number bit mask.

In option A), the OLT 210 determines a new Serial_Number bit mask (538A) that is compatible with the existing Serial_Number bit mask (i.e., provides for a unique ONU-ID when applied to the serial number of the ONU 208 in view of the ONU-IDs already assigned to the ONUs 202 and 206). The Serial_Number bit mask being different, the OLT 210 thus sends the Serial_Number bit mask in a message (540A). Aspects related to the step 510 apply mutatis mutandis to step 540A. Steps similar to the steps 514 and 518 may further be executed, as needed depending on the configuration, by the OLT 210 (not shown). The ONUs 202, 206 and 208 receive the new Serial_Number bit mask (542A). Depending on the configuration, ONUs 202 and 206 are likely to simply discard the message (e.g., not compatible in their current state). Yet, while it may imply complexity, the ONUs 202, 206 208 could all obtain their ONU-ID by applying the bit mask to their respective serial number (546A). Step 546A, in any case, is executed at least by the ONU 208. As exemplified in relation to steps 520A, the obtained ONU-ID may be stored (550A) by the ONU. Again, aspects presented in relation to steps 512, 516 and 520A are applicable here as well.

Option B), that involves no change to the Serial_Number bit mask, may be the result, for instance, of a preliminary determination that the existing Serial_Number bit mask is already proper or a configuration of the OLT 210 and the ONUs 202, 206 and 208 that allows only predetermined formats of serial numbers to be used under the OLT 210. In the latter case, the OLT 210 knows without processing that the Serial_Number bit mask previously determined is still valid. Else, a step of determining a Serial_Number bit mask (538B) similar to the step 508 may be executed by the OLT from computation of the serial numbers of the ONUs 202, 206 and 208 to arrive at the same Serial_Number bit mask previously determined. As such, step 538B may or not be executed in option B. Again, the determination that the existing Serial_Number bit mask is proper can also be made by applying he existing Serial_Number bit mask to the serial number of the ONU 208 and verifying if the obtained result is unique when compared to the ONU-IDs already in service. Nevertheless, the Serial_Number bit mask need to be made available at least to the ONU 208. This can be done, in the context of an added ONU, by sending the Serial_Number bit mask using a unicast message (540B) from the OLT 210 addressed to the ONU 208. In the specific context of PON, a unicast message sent before the assignment of an ONU-ID would actually be a broadcast message that contains the serial number of the target ONU (thereby enabling non-target ONUs to readily discard the message). Alternatively, the OLT 210 may render the Serial_Number bit mask available to the ONUs by sending a broadcast message (not shown) to all ONUs under the OLT 210 (as in 540A) or by sending a multicast message (not shown) to all affected ONUs under the OLT 210 (e.g., specifying multiple targeted serial numbers in a broadcast message). In all cases, the non-target ONUs (i.e. ONU 202 and the ONU 206 in the present example) may simply discard the Serial_Number bit mask (e.g., because it is incompatible with their current state or upon comparison with stored value (if any)) or could perform steps similar to the steps 512, 516 and 520A (e.g., for the sake of simplicity, such steps could be triggered by each received Serial_Number bit mask, no matter its difference from previous values).

Option C) implies that, given the existing Serial_Number bit mask determined in step 508, no new Serial_Number bit mask can be determined that would provide for a unique ONU-ID when compared to the ONU-IDs already assigned to the ONUs 202 and 206. In such a case, the OLT 210 could decide to determine a unique ONU-ID without reference to any bit mask and to assign the so determined ONU-ID using the known Assign_ONU-ID message. It shall be noted that the condition that prevents the OLT 210 from determining a new Serial_Number bit mask is the presence of an existing Serial_Number bit mask. Once the existing Serial_Number bit mask is no longer valid (e.g., triggered reset, planned or unplanned reboot, global ONU-IDs invalidation, etc.), a new Serial_Number bit mask shall be determinable.

In the context of the present invention as exemplified using the GPON technology, the size of an ONU-ID is currently set to 1 byte. Of source, the size could be changed (e.g., to 2 bytes in the future) without affecting the teachings of the present invention. Similarly, the size of a Serial Number in GPON is currently set to 8 bytes, which could change to a larger or smaller size without affecting the present invention so long as the requirement of having unique serial numbers under an OLT is respected.

For greater certainty, it shall be said that the present invention does not expressly nor completely replace the Assign_ONU-ID message per se. It rather allows a more efficient broadcast message to be used when possible, in order to avoid sending 3 specific Assign_ONU-ID messages per ONU. It has been shown above that there is a state in which an ONU is waiting for an ONU-ID assignment. The need for an ONU-ID in that specific state can be fulfilled by the Assign-ONU-ID message or the new message. As exemplified above, the present invention can fulfill the need of a single or a plurality of ONUs waiting for ONU-ID assignment. It shall nevertheless be readily appreciated by those skilled in the art that the gain of using the bit mask of the present invention grows with the number of ONUs waiting for an ONU-ID assignment.

The present invention is not limited to the use of a single bit mask, but could use several different bit masks and/or a mix of bit mask(s) and Assign_ONU-ID messages. For instance, a new bit mask could be determined and used each time an ONU reaches the ONU-ID waiting state. Another example is that the Assign_ONU-ID message could be used whenever a single ONU reaches the ONU_ID assignment state while a new bit mask could be determined and used each time a plurality of ONUs reach the ONU-ID waiting state (e.g., within a given time frame). It shall be noted, though, that the requirement of keeping ONU-IDs unique under a given OLT remains at all time, no matter the technique used to determined and assign the ONU-IDs.

In the context of the G984.3 standard, a Serial_Number_Mask Physical Layer Operations, Administration and Maintenance (PLOAM) message is suggested to convey the Serial_Number bit mask. Although the Serial_Number_Mask message bears the same name as a PLOAM message previously defined in G.983.4, the old version has been deprecated and was used to find a serial number rather than assign ONU-IDs. The Serial_Number_Mask message as specified in the context of the present invention can be used at any time by the OLT 210, but preferably during the activation process of the ONUs.
**Serial_Number_Mask message**
[Table 6]

**[Table ]**

| Octet | Content | Description |
|---|---|---|
| 1 | 11111111 | Broadcast message to all ONUs |
| 2 | 00000010 | Message identification 'Serial_Number_Mask' |
| 3-10 | nnnnnnnn | Serial number mask, specify only two bytes |
| 11-12 | Unspecified | |

| | | |
|---|---|---|
| NOTE - If more than two bytes are specified in the mask, only first two are considered | | |

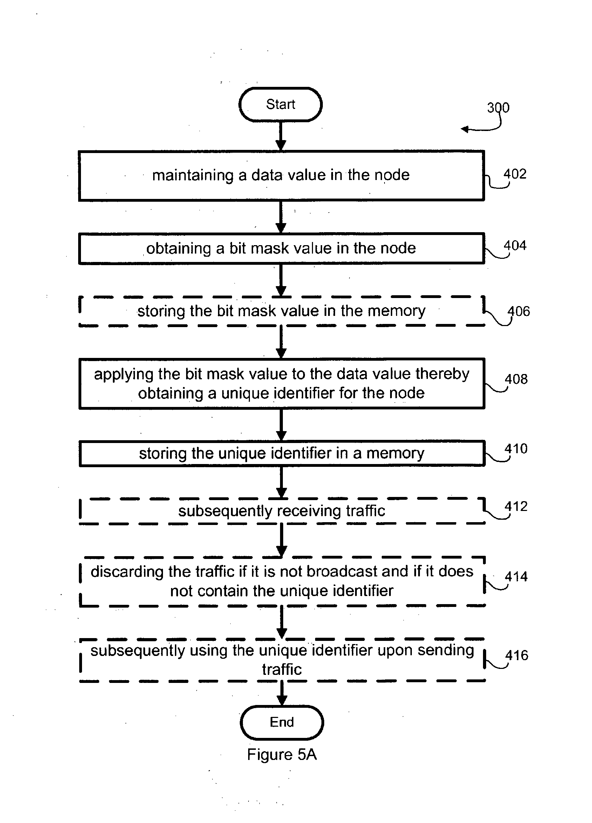

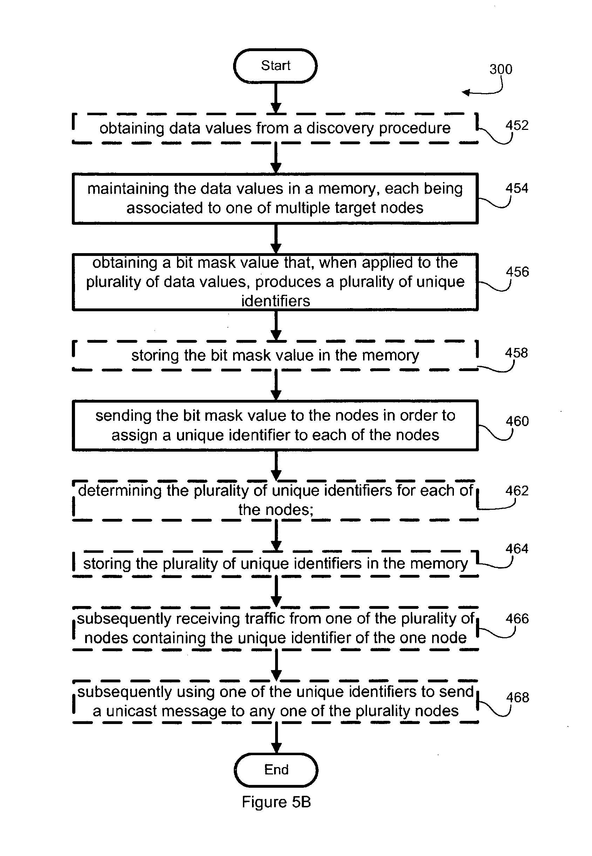

The present invention is of course applicable to different technologies and not solely to the PON technologies. An exemplary implementation of the present invention will be described with relation to Figure 5A and 5B, which shows exemplary flow charts in accordance with the teachings of the present invention. The flow chart on Figure 5A represents the action taken by a node that requires a unique identifier (e.g., an ONU) whereas Figure 5B represents the actions taken by a node whose responsibilities encompass unique identifier assignment (e.g., an OLT).

Figure 5A shows a first step 402 by which the node requiring a unique identifier firstmaintains a data value therein. The node thereafter obtains a bit mask value in the node (404). The bit mask value may be obtained by the reception of a broadcast, multicast or unicast message that the node understands as being addressed thereto. The node may further read the bit mask value from a remote location (e.g., network drive) or local memory upon receiving instruction to this affect. The node may thereafter optionally store the bit mask value in a memory of the node 406 (e.g., for future use or reference).

In order to obtain its unique identifier, the node then applies the bit mask value to the data value (408). The unique identifier may optionally be stored in the memory (410) of the node. The unique identifier can be re-obtained at will by reapplying the bit mask to the data value. Person skilled in the art will readily be able to decide whether it is sound to store the unique identifier based on the memory characteristics of the node and the time/resources needed to re-obtain the unique identifier.

Following step 408, the node can use the unique identifier for its intended purpose. The present invention does not limit the types of application of the unique identifier. In some instances, the unique identifier may be used in network messages to distinguish traffic source and/or destination. In such cases, the node may then subsequently receive traffic (412). If the traffic does not contain the unique identifier and is not broadcast, then the node may simply discard the traffic (414). Similarly, the node may subsequently use the unique identifier upon sending traffic (416) (i.e., indicating the source as being the unique identifier).

On Figure 5B, a node whose responsibilities encompass unique identifier assignment may optionally obtain multiple data values from a discovery procedure (452). The multiple data values may be obtained through configuration or manual data input in the node. The node thereafter maintains the data values in a memory thereof (454). Each of the data values is associated to one of multiple target nodes to which the node has to assign a unique identifier.

The node then obtains a bit mask value that, when applied to the multiple data values, produces a plurality of unique identifiers (456). The step 456 may be performed in many different ways. The bit mask value may be read from an appropriate location in the memory of the node. Alternatively, the bit mask value may optionally be obtained by computing a preliminary bit mask value and applying the preliminary bit mask value to the multiple data values until the plurality of unique identifiers is obtained in which case the preliminary bit mask value provides the bit mask value. The bit mask value may thereafter be stored in the memory (458) if not already the case or if it is advantageous to be able to refer to the value at a later time or frequently. The person skilled in the art will recognize what is best suited depending on the implementation.

Following step 456, the node sends the bit mask value to the multiple target nodes in order to assign a unique identifier to each of those nodes (460). Step 460 may be performed, for instance, by sending a broadcast message to the target nodes or by sending a multicast message to the target nodes.

If it is advantageous in the implementation, the node may determine the plurality of unique identifiers for each of the target nodes (462). Such unique identifiers may further be stored in the memory of the node (464). It shall be noted that the unique identifiers may have already been determined and potentially stored, if the bit mask value was obtained by computing the data values with the preliminary bit mask (as shown earlier with step 456).

Following step 460, the unique identifiers may be used by the target nodes and potentially the node for their intended purposes. As mentioned earlier, the present invention does not limit the types of application of the unique identifiers. In some instances, the unique identifiers may be used in network messages to distinguish traffic source and/or destination. In such cases, the node may thensubsequently receive traffic from one of the target nodes containing the unique identifier of the one node (466). The unique identifier of the one node has been obtained therein using the bit mask value. Similarly, the node may subsequently use an appropriate unique identifier to send a unicast message to any one of the target nodes (468).

Following the procedure of Figure 5B, the node may additionally obtain a further data value for a newly discovered node and store the further data value of the newly discovered node in the memory. The newly discovered node requires a further unique identifier. The node may simply determine a further unique identifier for the newly discovered node and send the further unique identifier to the newly discovered node in a message meaningful only to the newly discovered node (e.g., an Assign_ONU-ID message). Alternatively, the node may verify if the bit mask value, when applied to the further data value, produces a further unique identifier when compared to the plurality of unique identifiers. If the further unique identifier is not in the plurality of unique identifiers, the node may simply send the bit mask value to the newly discovered node and, as needed, store the further unique identifier in its memory. The node may also, if the further unique identifier is in fact not unique, compute a new bit mask before sending the new bit mask to the newly discovered node.

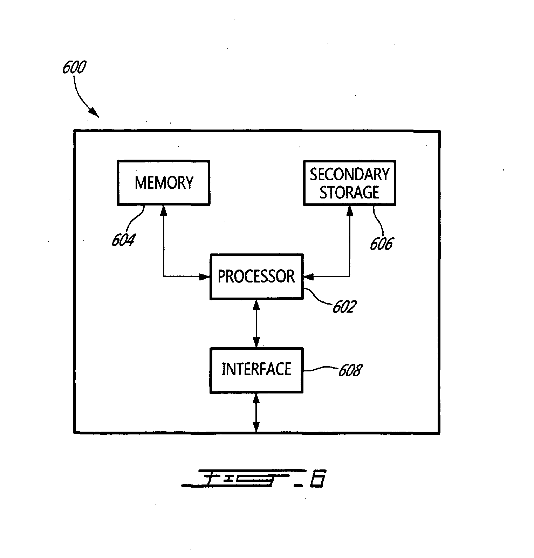

The exemplary embodiments described above provide methods and nodes for assigning multiple unique identifiers through the use of a bit mask value, which include various communications nodes, an example of which is shown in Figure 6. Therein, communications node 600 can contain a processor 602 (or multiple processor cores), memory 604, one or more secondary storage devices 606 and a communications interface 608. The secondary storage devices 606 can be a local and/or remote storage mechanism. It can be a single storage device or a plurality of physical or logical storage mechanisms put together as to provide a storage means suitable for the purpose of the present invention. The memory 604 is expected to be used to store program instructions and temporary data, but could also be used to store data permanently (e.g., long enough for completion of all step related to stored data for purpose of the present invention). Persons skilled in the art shall readily identify the storage means, memory or memories suitable in the various contexts of application of the present invention. Processor 602 is capable of processing instructions in support of performing the duties of an OLT 210. As another example, the communications interface 608 can include elements of an optical transceiver to permit the communications node to transmit and receive optical signals, e.g., an optical modulator, an optical demodulator, and one or more lasers connected to optical fiber. As such, communications node 600 is capable of performing the tasks of an OLT 210 as described in the exemplary embodiments herein to augment the capabilities of a PON. More specifically the communications node 600, via its various modules 602-606, can maintain data values associated to a plurality of nodes, obtain a bit mask value that, when applied to the multiple data values, produces a plurality of unique identifiers and send the bit mask value to the multiple target nodes in order to assign a unique identifier to each of those nodes. Additionally, communications node 600 is capable of performing the duties of an ONU, i.e., communications node 600 can maintain a data value therein, obtain a bit mask value and apply the bit mask value to the data value in order to obtain its unique identifier. 20.

The communications node 600 may comprise a secondary storage 606 capable of maintaining at least one data value, one unique identifier associated with each of the at least one data value and a bit mask value. The communication node 600 may also comprise a memory 604 for storing program instructions associated with the generation of the unique identifier and a processor 602 for executing the program instructions causing the bit mask value to be applied to the data value thereby obtaining the associated unique identifier. The associated unique identifier can be associated to the communication node 600. In such a scenario, the communication node 600 may further comprise a communication interface 608 for, prior to executing the program instructions, receiving the bit mask value and subsequently to obtaining the associated unique identifier, sending traffic containing the associated unique identifier. The received bit mask value may thereafter be stored in the secondary storage 606. The communication interface 608 may also be for, subsequently to obtaining the associated unique identifier, receiving traffic and discarding the traffic if it is not broadcast and does not contain the associated unique identifier.

The secondary storage 606 may maintain a plurality of data values, each being associated to one of a plurality of nodes. Each of the plurality of nodes may be Optical Network Unit (ONU) and each of the data values may correspond to a serial number of its related ONU. In such cases, the communication interface 608 may be for, prior to maintaining the plurality of data values, obtaining the serial numbers from the plurality of ONUs from a discovery procedure.

The memory 604 may store further program instructions associated with the generation of the bit mask value and the processor 602 may be capable of obtaining the bit mask value upon execution of the further program instructions by iteratively computing a preliminary bit mask value and applying the preliminary bit mask value to the plurality of data values until each unique identifier associated to the plurality of data values is obtained in which case the preliminary bit mask value provides the bit mask value.

The communication interface 608 may be for sending the bit mask value into a broadcast or multicast message to a plurality of nodes. The communication interface may then further be used to subsequently receive traffic from one of the plurality of nodes containing the unique identifier of the one node. The unique identifier of the one node has been obtained therein using the bit mask value. Likewise, the communication interface 608 may further subsequently use one of the unique identifiers to send a unicast message to any one of the plurality nodes.

The innovative teachings of the present invention have been described with particular reference to numerous exemplary embodiments. However, it should be understood that this class of embodiments provides only a few examples of the many advantageous uses of the innovative teachings of the invention. In general, statements made in the specification of the present application do not necessarily limit any of the various claimed aspects of the present invention. Moreover, some statements may apply to some inventive features but not to others. In the drawings, like or similar elements are designated with identical reference numerals throughout the several views, and the various elements depicted are not necessarily drawn to scale.

## Claims

1. A method for assigning unique identifiers to a plurality of optical nodes comprising the step of:
- maintaining (454) a plurality of distinct data values in a memory, each being associated to one of the nodes;
and **characterised in that** it further comprises the following steps:
- obtaining (456) a bit mask value that, when applied to the plurality of data values, produces a plurality of unique identifiers; and
- sending (460) the bit mask value to the nodes in order to assign a unique identifier to each of the nodes.

2. The method of claim 1 wherein the step of maintaining (454) the plurality of data values is performed by storing each of the plurality of data values in the memory of an Optical Line Terminal, OLT (104), wherein each of the plurality of nodes is an Optical Network Unit, ONU (112, 118), each of the data values corresponding to a serial number of its related ONU.

3. The method of claim 2 further comprising a first step of, prior to the step of maintaining (454) the plurality of data values in the OLT (104), obtaining (452) the serial numbers from the plurality of ONUs (112, 118) from a discovery procedure.

4. The method of claim 1 further comprising a step of, following the step of obtaining (456) the bit mask value, storing (458) the bit mask value in the memory.

5. The method of claim 4 wherein the step of obtaining (456) the bit mask value is performed by iteratively:
- computing a preliminary bit mask value; and
- applying the preliminary bit mask value to the plurality of data values;
- until the plurality of unique identifiers is obtained in which case the preliminary bit mask value provides the bit mask value.

6. The method of claim 1 wherein the step of obtaining (456) the bitmask value is performed by reading an appropriate value from the memory.

7. The method of claim 1 wherein the step of sending (460) the bit mask value is performed by sending a broadcast message to the plurality of nodes.

8. The method of claim 1 wherein the step of sending (460) the bit mask value is performed by sending a multicast message to the plurality of nodes.

9. The method of claim 1 further comprising steps of, following the step of obtaining the bit mask value:
- determining (462) the plurality of unique identifiers for each of the nodes; and
- storing (464) the plurality of unique identifiers in the memory.

10. The method of claim 9 further comprising a step of subsequently receiving (466) traffic from one of the plurality of nodes containing the unique identifier of the one node, wherein the unique identifier of the one node has been obtained therein using the bit mask value.

11. The method of claim 9 further comprising a step of subsequently using (468) one of the unique identifiers to send a unicast message to any one of the plurality of nodes.

12. The method of claim 1 further comprising steps of:
- obtaining a further data value for a newly discovered node; and
- storing the further data value of the newly discovered node in the memory.

13. The method of claim 12 further comprising steps of:
- determining a further unique identifier for the newly discovered node; and
- sending the further unique identifier to the newly discovered node in an Assign_ONU-ID message.

14. The method of claim 12 further comprising a step of verifying if the bit mask value, when applied to the further data value, produces a further unique identifier when compared to the plurality of unique identifiers.

15. The method of claim 14 further comprising steps of:
- if the further unique identifier is not in the plurality of unique identifiers:
- sending the bit mask value to the newly discovered node; and
- storing the further unique identifier in the memory,
- else, computing a new bit mask before sending the new bit mask to the newly discovered node.

## Patentansprüche

1. Verfahren zur Zuweisung von eindeutigen Kennungen zu einer Mehrzahl von optischen Knoten, umfassend die folgenden Schritte:
- Bewahren (454) einer Mehrzahl von verschiedenen Datenwerten in einem Speicher, die jeweils einem der Knoten zugeordnet sind;
und **dadurch gekennzeichnet, dass** es ferner die folgenden Schritte umfasst:
- Erhalten (456) eines Bitmaskenwertes, der, wenn auf die Mehrzahl von Datenwerten angewendet, eine Mehrzahl von eindeutigen Kennungen erzeugt; und
- Senden (460) des Bitmaskenwertes an die Knoten, um jedem der Knoten eine eindeutige Kennung zuzuweisen.

2. Verfahren nach Anspruch 1, wobei der Schritt des Bewahrens (454) der Mehrzahl von Datenwerten durch Speichern jedes der Mehrzahl von Datenwerten im Speicher einer optischen Leitungsanschlusseinheit OLT (104) ausgeführt wird, wobei jeder der Mehrzahl von Knoten eine optische Netzeinheit ONU (112, 118) ist, wobei jeder der Datenwerte einer Seriennummer seiner zugehörigen ONU entspricht.

3. Verfahren nach Anspruch 2, ferner umfassend vor dem Schritt des Bewahrens (454) der Mehrzahl von Datenwerten in der OLT (104) einen ersten Schritt des Erhaltens (452) der Seriennummern von der Mehrzahl von ONUs (112, 118) aus einer Erkennungsprozedur.

4. Verfahren nach Anspruch 1, ferner umfassend nach dem Schritt des Erhaltens (456) des Bitmaskenwertes einen Schritt des Speicherns (458) des Bitmaskenwertes im Speicher.

5. Verfahren nach Anspruch 4, wobei der Schritt des Erhaltens (456) des Bitmaskenwertes ausgeführt wird durch iteratives
- Berechnen eines vorläufigen Bitmaskenwertes; und
- Anwenden des vorläufigen Bitmaskenwertes auf die Mehrzahl von Datenwerten;
- bis die Mehrzahl von eindeutigen Kennungen erhalten wird, in welchem Fall der vorläufige Bitmaskenwert den Bitmaskenwert bereitstellt.

6. Verfahren nach Schritt 1, wobei der Schritt des Erhaltens (456) des Bitmaskenwertes durch Auslesen eines entsprechenden Wertes aus dem Speicher ausgeführt wird.

7. Verfahren nach Schritt 1, wobei der Schritt des Sendens (460) des Bitmaskenwertes durch Senden einer Broadcast-Nachricht an die Mehrzahl von Knoten ausgeführt wird.

8. Verfahren nach Schritt 1, wobei der Schritt des Sendens (460) des Bitmaskenwertes durch Senden einer Multicast-Nachricht an die Mehrzahl von Knoten ausgeführt wird.

9. Verfahren nach Anspruch 1, ferner umfassend nach dem Schritt des Erhaltens des Bitmaskenwertes die folgenden Schritte:
- Bestimmen (462) der Mehrzahl von eindeutigen Kennungen für jeden der Knoten; und
- Speichern (464) der Mehrzahl von eindeutigen Kennungen im Speicher.

10. Verfahren nach Anspruch 9, ferner umfassend einen Schritt des anschließenden Empfangens (466) von Verkehr von einem der Mehrzahl von Knoten, der die eindeutige Kennung des einen Knotens enthält, wobei die eindeutige Kennung des einen Knotens darin unter Verwendung des Bitmaskenwerts erhalten wurde.

11. Verfahren nach Anspruch 9, ferner umfassend einen Schritt des anschließenden Verwendens (468) einer der eindeutigen Kennungen, um eine Unicast-Nachricht an einen beliebigen der Mehrzahl von Knoten zu senden.

12. Verfahren nach Anspruch 1, ferner umfassend die folgenden Schritte:
- Erhalten eines weiteren Datenwertes für einen neu erkannten Knoten; und
- Speichern des weiteren Datenwertes des neu erkannten Knotens im Speicher.

13. Verfahren nach Anspruch 12, ferner umfassend die folgenden Schritte:
- Bestimmen einer weiteren eindeutigen Kennung für den neu erkannten Knoten; und
- Senden der weiteren eindeutigen Kennung in einer Assign_ONU-ID-Nachricht an den neu erkannten Knoten.

14. Verfahren nach Anspruch 12, ferner umfassend einen Schritt des Verifizierens, ob der Bitmaskenwert, wenn auf den weiteren Datenwert angewendet, eine weitere eindeutige Kennung erzeugt, wenn mit der Mehrzahl von eindeutigen Kennungen verglichen.

15. Verfahren nach Anspruch 14, ferner umfassend die folgenden Schritte:
- wenn die weitere eindeutige Kennung nicht in der Mehrzahl von eindeutigen Kennungen ist:
- Senden des Bitmaskenwerts an den neu erkannten Knoten; und
- Speichern der weiteren eindeutigen Kennung im Speicher,
- andernfalls Berechnen eines neuen Bitmaskenwerts vor dem Senden der neuen Bitmaske an den neu erkannten Knoten.

## Revendications

1. Procédé d'assignation d'identifiants uniques à une pluralité de noeuds optiques comprenant l'étape consistant à :
- maintenir (454) une pluralité de données distinctes dans une mémoire, chacune étant associées à un des noeuds ;
et **caractérisé en ce qu'**il comprend en outre les étapes suivantes :
- obtenir (456) un masque de bits qui, lorsqu'appliqué à la pluralité de données, produit une pluralité d'identifiants uniques ; et
- transmettre (460) le masque de bits aux noeuds de manière à assigner un identifiant unique à chacun des noeuds.

2. Procédé selon la revendication 1, dans lequel l'étape de maintenir (454) la pluralité de données est effectuée en enregistrant chacune de la pluralité de données dans la mémoire d'un terminal de ligne optique, OLT (104), dans lequel chacun de la pluralité de noeuds est une unité de réseau optique, ONU (112,118), chacune des données correspondant à un numéro de série de son ONU afférente.

3. Procédé selon la revendication 2, comprenant en outre une première étape de, avant l'étape de maintenir (454) la pluralité de données dans l'OLT (104), obtenir (452) des numéros de série de la pluralité d'ONUs (112,118) d'après une procédure de découverte.

4. Procédé selon la revendication 1, comprenant en outre une étape de, suite à l'étape d'obtenir (456) le masque de bits, enregistrer (458) le masque de bits dans la mémoire.

5. Procédé selon la revendication 4, dans lequel l'étape d'obtenir (456) le masque de bits est effectuée itérativement en:
- calculant informatiquement un masque de bits préliminaire ; et
- appliquant le masque de bits préliminaire à la pluralité de données ;
- jusqu'à ce que la pluralité d'identifiants uniques soit obtenue auquel cas le masque de bits préliminaire fournit le masque de bits.

6. Procédé selon la revendication 1, dans lequel l'étape d'obtenir (456) le masque de bits est effectuée en lisant une valeur appropriée dans la mémoire.

7. Procédé selon la revendication 1, dans lequel l'étape de transmettre (460) le masque de bits est effectuée en envoyant un message de diffusion à la pluralité de noeuds.

8. Procédé selon la revendication 1, dans lequel l'étape de transmettre (460) le masque de bits est effectuée en transmettant un message de multidiffusion à la pluralité de noeuds.

9. Procédé selon la revendication 1 comprenant en outre les étapes consistant à, suite à l'étape d'obtenir le masque de bits :
- déterminer (462) la pluralité d'identifiants uniques pour chacun des noeuds ; et
- enregistrer (464) la pluralité d'identifiants uniques dans la mémoire.

10. Procédé selon la revendication 9, comprenant en outre une étape de réception subséquente (466) de trafic provenant d'un de la pluralité de noeuds contenant l'identifiant unique du noeud, dans lequel l'identifiant unique du noeud a été obtenu dans celui-ci en utilisant le masque de bits.

11. Procédé selon la revendication 9, comprenant en outre une étape d'utilisation subséquente (468) d'un des identifiants uniques pour transmettre un message de monodiffusion à n'importe lequel de la pluralité de noeuds.

12. Procédé selon la revendication 1 comprenant en outre les étapes consistant à :
- obtenir une donnée supplémentaire pour un noeud nouvellement découvert ; et
- enregistrer la donnée supplémentaire du noeud nouvellement découvert dans la mémoire.

13. Procédé selon la revendication 12 comprenant en outre les étapes consistant à :
- déterminer un identifiant unique supplémentaire pour le noeud nouvellement découvert ; et
- transmettre l'identifiant unique supplémentaire au noeud nouvellement découvert dans un message Assign_ONU-ID.

14. Procédé selon la revendication 12, comprenant en outre une étape de vérifier si le masque de bits, lorsqu'appliqué à la donnée supplémentaire, produit un identifiant unique supplémentaire lorsque comparé à la pluralité d'identifiants uniques.

15. Procédé selon la revendication 14 comprenant en outre les étapes consistant à :
- si l'identifiant unique supplémentaire n'est pas dans la pluralité d'identifiants uniques :
- envoyer le masque de bits au noeud nouvellement découvert ; et
- enregistrer l'identifiant unique supplémentaire dans la mémoire ;
- sinon, calculer informatiquement un nouveau masque de bits avant d'envoyer le nouveau masque de bits au noeud nouvellement découvert.
